# EUROPEAN PATENT APPLICATION

(11) **EP 1 780 633 A2**
(43) Date of publication of application: **02.05.2007**
(21) Application number: 06122791.4
(22) Date of filing: 24.10.2006
(51) Int. Cl.: G06F 3/048

(54) **Three-dimensional motion graphic user interface and apparatus and method for providing three-dimensional motion graphic user interface**

(30) Priority: 31.10.2005 KR 20050103172
(71) Applicant: SAMSUNG ELECTRONICS CO., LTD., Suwon-si, Gyeonggi-do (KR)
(72) Inventor: Ok, Joon-ho, Seoul (KR); Rhee, Young-ho, Seoul (KR); Park, Sang-hyun, Seoul (KR); Cho, Soo-hoo, Seoul (KR); Jeon, Cheol-yong, Seoul (KR)
(74) Representative: Clark, David James

(57) **Abstract**

A three-dimensional motion graphic user interface and an apparatus and method for providing the three-dimensional motion graphic user interface are provided. The apparatus for providing a three-dimensional motion graphic user interface (600) includes a display unit (660) displaying along a first view point a plurality of polyhedral objects having surfaces on which information is displayed; an input unit (630) receiving input values for switching view points from a user; and a graphic user interface unit (650) rearranging the polyhedral objects along a second view point on the basis of the input values and displaying the information on the surfaces of the rearranged polyhedral objects orthogonal to the second view point.

## Description

Apparatus and methods consistent with the present invention relate to a three-dimensional motion graphic user interfaces,

In general, graphic user interfaces (GUIs) are used with digital apparatus to enable convenient use of the digital apparatus, and to rapidly and intuitionally communicate information to a user. The user can move a pointer using a pointing device, such as a key pad, a keyboard, or a mouse, and select an object indicated by the pointer, thereby instructing the digital apparatus to perform a desired operation.

GUIs are classified into two-dimensional GUIs and three-dimensional GUIs. The two-dimensional GUI is two-dimensional and static, and the three-dimensional GUI is three-dimensional and dynamic. Therefore, as compared with the two-dimensional GUI, the three-dimensional GUI can communicate more information to the user visually, and further satisfy the sensitivity of the user. For these reasons, the two-dimensional GUI traditionally used with the digital apparatus is being replaced with the three-dimensional GUI.

However, when the user changes his or her view point with respect to the screen, the three-dimensional GUI may communicate distorted or unnecessary image information to the user. In order to solve this problem, various techniques have been proposed (for example, Korean Patent Unexamined Publication No. 2003-040284, titled "METHOD OF ARRANGING 3D OBJECTS IN 3D VIRTUAL SPACE WHEN INTERNET USER INTERFACE IS MANUFACTURED"). However, such techniques may not completely solve the problem.

It is an aim of exemplary embodiments of the present invention to address the above disadvantages and other disadvantages not described above. According to an aspect of the present invention, there is provided an apparatus for providing a three-dimensional Motion Graphic User Interface (MGUI), the apparatus including a display unit which displays along a first view point a plurality of polyhedral objects whose specific surfaces have information displayed thereon; an input unit which receives input values for switching view points from a user; and a Graphic User Interface (GUI) unit which rearranges the polyhedral objects along a second view point on the basis of the input values and displays the information on the surfaces of the rearranged polyhedral objects orthogonal to the second view point.

According to another aspect of the invention, there is provided a method of providing a three-dimensional MGUI, the method including displaying along a first view point a plurality of polyhedral objects whose specific surfaces have information displayed thereon; receiving input values for changing a view point from a user; and rearranging the polyhedral objects along a second view point, on the basis of the input values; and displaying the information on the surfaces of the rearranged polyhedral objects orthogonal to the second view point.

According to another aspect of the invention there is provided a three-dimensional MGUI including a three-dimensional space composed of a specific plane and an axis orthogonal to the specific plane; and a polyhedral object having information displayed on a specific surface thereof, arranged in the three-dimensional space along a first view point, rearranged along a second view point on the basis of values input by a user, and displaying information on a surface thereof orthogonal to the second view point.

According to the present invention there is provided an apparatus and method as set forth in the appended claims. Preferred features of the invention will be apparent from the dependent claims, and the description which follows.

For a better understanding of the invention, and to show how embodiments of the same may be carried into effect, reference will now be made, by way of example, to the accompanying diagrammatic drawings in which:

In this way, the present invention may provide a three-dimensional motion graphic user interface (MGUI) capable of communicating optimum information according to a view point.
FIG. 1 is a diagram illustrating the overall structure of a three-dimensional MGUI according to an exemplary embodiment of the present invention;
FIG. 2 is a diagram illustrating a three-dimensional space divided into an active space and an inactive space according to an exemplary embodiment of the invention;
FIG. 3A is a diagram illustrating an example of a polyhedral object, which is a component of an MGUI;
FIG. 3B is a diagram illustrating a polyhedral object having two-dimensional visual information mapped to the surfaces thereof;
FIG. 3C is a diagram illustrating a polyhedral object having three-dimensional information mapped to a surface thereof;
FIGS. 4A and 4B are diagrams illustrating a method of arranging a plurality of polyhedral objects;
FIG. 5 is a diagram illustrating the motion of the polyhedral objects in the three-dimensional space with the movement of a camera view;
FIG. 6A is a block diagram illustrating an apparatus for providing a three-dimensional MGUI according to an exemplary embodiment of the invention;
FIG. 6B is a block diagram illustrating a GUI unit as shown in FIG. 6A;
FIG. 7 is a flowchart illustrating a process of rearranging the polyhedral objects with the movement of the camera view;
FIGS. 8A to 8C are diagrams illustrating a rearrangement of the polyhedral objects with the movement of the camera view;
FIG. 9 is a flowchart illustrating a process of rotating the polyhedral objects along the camera view, while rearranging the polyhedral objects with the movement of the camera view;
FIGS. 10A to 10C are diagrams illustrating the polyhedral objects that are rotated along the camera view while being rearranged with the movement of the camera view;
FIGS. 11A to 11C are diagrams illustrating a process of mapping information on the surfaces of the polyhedral objects facing the camera view, while rearranging the polyhedral objects with the movement of the camera view;
FIG. 12 is flowchart illustrating a process of changing information displayed on the surfaces of the polyhedral objects, while rearranging the polyhedral objects with the movement of the camera view; and
FIGS. 13A to 13C are diagrams illustrating a process of changing information displayed on the surfaces of the polyhedral objects, while rearranging the polyhedral objects with the movement of the camera view.

Advantages and features of the present invention and methods of accomplishing the same may be understood more readily by reference to the following detailed description of exemplary embodiments and the accompanying drawings. A three-dimensional MGUI and an apparatus and method for providing the three-dimensional MGUI according to exemplary embodiments of the present invention will be described below with reference to block diagrams and flowcharts of the accompanying drawings. It will be understood that blocks in the accompanying block diagrams and combinations of steps in flow charts can be performed by computer program instructions. These computer program instructions can be provided to processors of, for example, general-purpose computers, special-purpose computers, and programmable data processing apparatuses. Therefore, the instructions performed by the computer or a processor of the programmable data processing apparatus create means for executing functions described in the blocks in the block diagrams or the steps in the flow charts. The computer program instructions can be stored in a computer usable memory, or a computer readable memory of the computer or the programmable data processing apparatus, in order to realize the functions in a specific manner. Therefore, the instructions stored in the computer usable memory or the computer readable memory can manufacture products, including the instruction means for performing the functions described in the blocks in the block diagrams or the steps in the flow charts. Also, the computer program instructions can be loaded into the computer or the computer programmable data processing apparatus. Therefore, a series of operational steps are performed in the computer or the programmable data processing apparatus to generate a process executed by the computer, which makes it possible for the instructions operating the computer or the programmable data processing apparatus to provide steps of executing the functions described in the blocks of the block diagrams or the steps of the flow charts.

Each block or each operation may indicate a portion of a code, a module, or a segment including one or more executable instructions for performing a specific logical function (or functions). It should be noted that in some modifications of the invention, the functions described in the blocks or the operations may be performed in a different order. For example, two blocks or operations shown as sequential may actually be performed at the same time, or they may sometimes be performed in reverse order according to the corresponding functions.

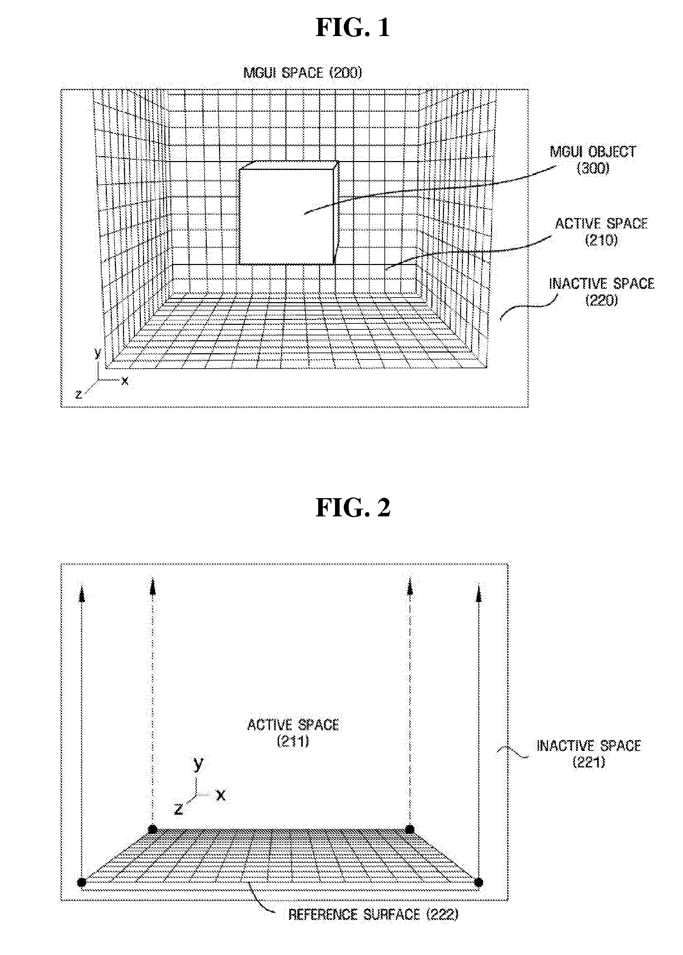

FIG. 1 illustrates the overall configuration of a three-dimensional MGUI according to an exemplary embodiment of the present invention.

The three-dimensional MGUI according to an exemplary embodiment of the invention is a user interface (UI) capable of establishing a more dynamic GUI environment on the basis of a three-dimensional environment and motion graphics. The MGUI environment includes an MGUI space 200, MGUI objects 300, a method of arranging MGUI objects 300, and an MGUI camera view.

An MGUI space 200 is a space for establishing the MGUI environment, and it may be divided into an active space 210 and an inactive space 220 according to the characteristic of the space. The active space 210 can be used when a UI is designed. The MGUI space 200 may have various types of spaces according to a method of dividing the active space 210 and the inactive space 220. FIG. 2 shows an MGUI active space 211 that is limited to an area by a reference surface 222 in the x-axis and z-axis directions and an unlimited area above the reference surface 222 in the y-axis direction, and an MGUI inactive space 221 outside the active space..

An MGUI object 300 is a component of an MGUI that provides information to a user while interacting with the user in the three-dimensional environment. The MGUI object 300 may exist in an active space 211 in the three-dimensional space. For example, when a space is divided into an active space 211 and an inactive space 221 as shown in FIG. 2, the MGUI object 300 can be positioned in only an inner space of a pillar represented by arrows, but cannot be positioned in an outer space of the pillar represented by arrows, nor can it be positioned below the reference surface.

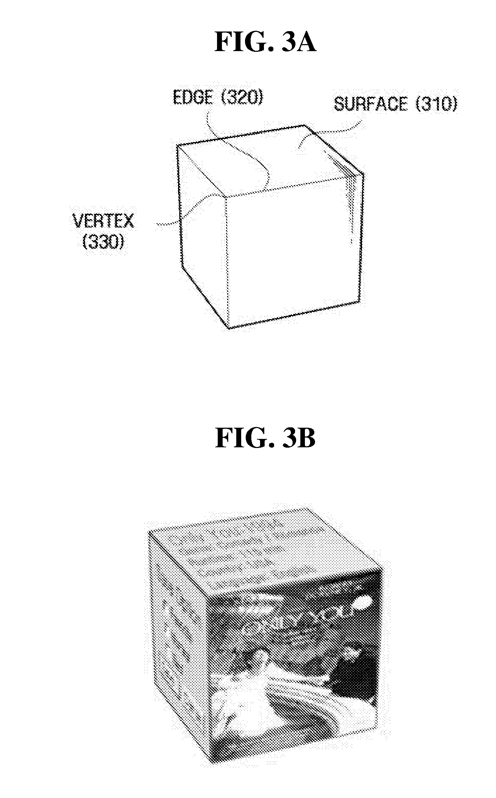

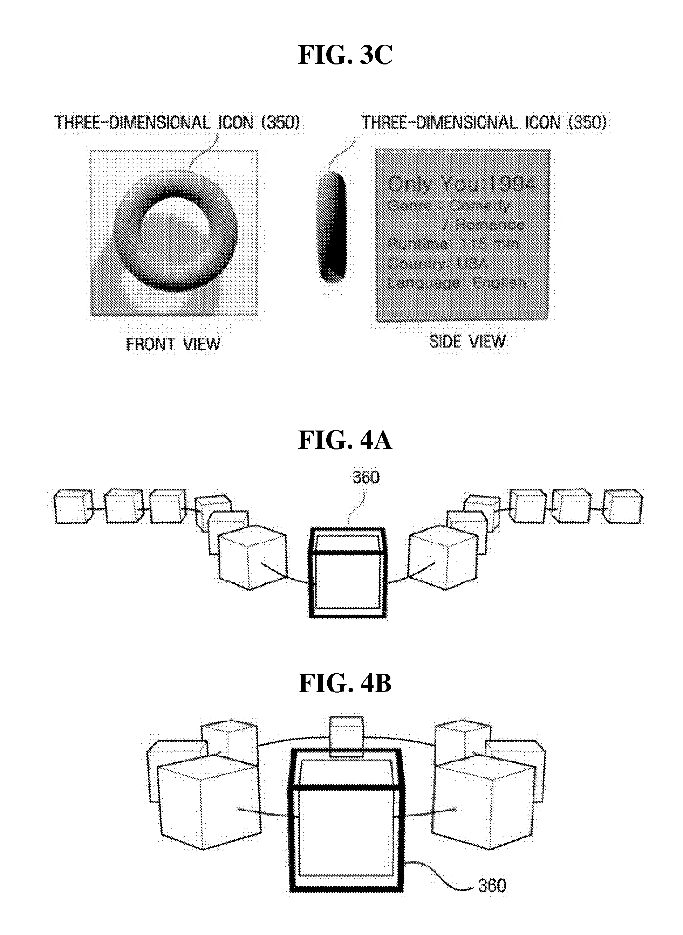

The MGUI object 300 will be described in detail with reference to FIGS. 3A to 3C. FIG. 3A is a diagram showing an example of a polyhedral object of the three-dimensional MGUI. FIGS. 3B and 3C are diagrams illustrating a polyhedral object having information mapped to surfaces thereof.

The polyhedral object shown in FIG. 3A includes a plurality of surfaces 310, a plurality of edges 320, and a plurality of vertexes 330. FIG. 3A shows a hexahedron as the polyhedral object, but the polyhedral object may be a trigonal prism or a hexagonal prism. A sphere or other shape may be formed as a polyhedron composed of numerous surfaces. For the purpose of simplicity of explanation, a hexahedron will be taken as an example of a polyhedron.

The surfaces 310 of the polyhedral object may serve as information surfaces. An information surface is a surface capable of displaying information to be communicated to a user, and information on controllable menu items or sub-menu items can be communicated to the user by means of the information surfaces. As shown in FIG. 3B, two-dimensional visual information, such as text, images, moving pictures, and two-dimensional widgets, can be displayed on the information surfaces. As shown in FIG. 3C, three-dimensional information, such as a three-dimensional icon 350, can be displayed on the information surface.

The polyhedral object has the following attributes. The polyhedral object has an identifier and a size as attributes of a polyhedron. The polyhedral object has, as surface attributes, a number, a color, transparency, and information on whether a corresponding surface is an information surface. In addition, the polyhedral object has, as edge attributes, the colors of the edges. These attributes include information on objects included in the polyhedral object. These attributes are not limited to those mentioned above, and a variety of attributes may exist according to application fields.

The polyhedral object can be moved or transformed in the three-dimensional space. For example, the polyhedral object can exhibit positional movement, variation in size, and rotation. In the case of the rotation, the polyhedral object can rotate on any one of x, y, and z axes at a predetermined angle and in a predetermined direction.

A method of arranging MGUI objects includes determining how to arrange object groups, each composed of one or more objects, in the three-dimensional space. For example, as shown in FIG. 4A, a plurality of objects in the same group may be connected and arranged in a curved line, or they may be arranged in a circle, as shown in FIG. 4B. In FIGS. 4A and 4B, one of the objects may be selected by moving a mark 360 indicating a focus, or by moving objects in the horizontal direction, with the mark 360 indicating the focus fixed.

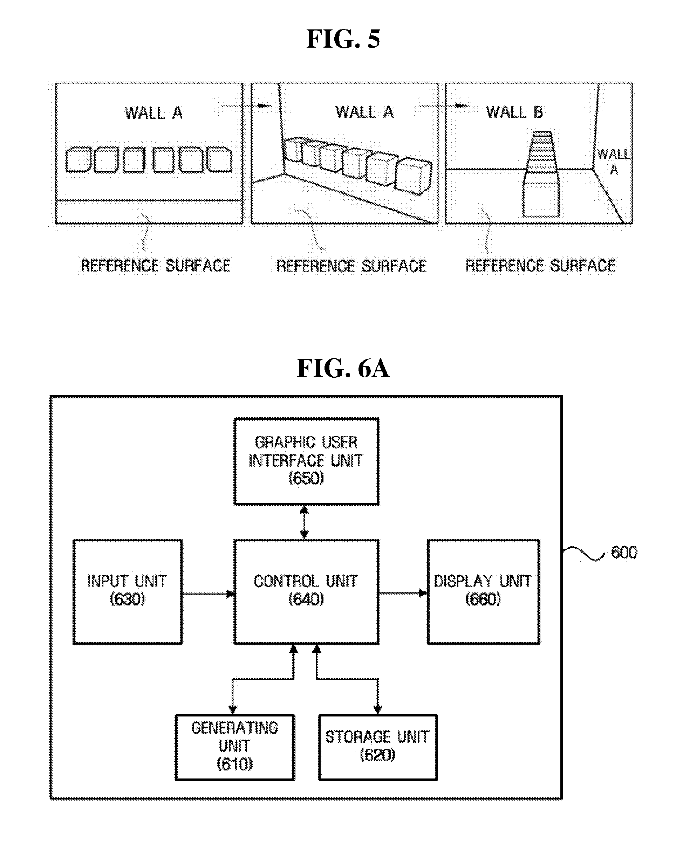

The MGUI camera view is a view point in the MGUI space 200. The camera view can move in the three-dimensional space. The movement of the camera view provides navigation in the MGUI space 200, which causes motion to be generated in the entire MGUI space 200. The MGUI camera view is the main cause of motion in the MGUI environment, along with unique motion attributes of the MGUI objects. FIG. 5 shows that all the objects rotate in the clockwise direction in the three-dimensional space, when the camera view rotates in the counterclockwise direction.

FIG. 6A is a block diagram illustrating a three-dimensional MGUI apparatus 600 according to an exemplary embodiment of the present invention.

The three-dimensional MGUI apparatus 600 may be composed of a digital apparatus including digital circuits for processing digital data. Examples of the digital device may include a computer, a printer, a scanner, a pager, a digital camera, a facsimile, a digital copying machine, a digital appliance, a digital telephone, a digital projector, a home server, a digital video recorder, a digital TV broadcasting receiver, a digital satellite broadcasting receiver, a set-top box, a personal digital assistance (PDA), and a mobile phone.

More specifically, the three-dimensional MGUI apparatus 600 includes a generating unit 610, a storage unit 620, an input unit 630, a control unit 640, a display unit 660, and a GUI unit 650.

The generating unit 610 generates the MGUI space 200 and a plurality of polyhedral objects. For example, when the three-dimensional MGUI apparatus 600 has main menu items, such as a phone book, Short Messaging Service (SMS), camera, sound, rainbow, music, setup, and "my phone", the generating unit 610 generates polyhedral objects corresponding to the main menu items.

The storage unit 620 stores information on the MGUI space 200, the polyhedral objects generated by the generating unit 610, and the attributes of the polyhedral objects. That is, the storage unit 620 stores the colors and sizes of the surfaces of the polyhedral objects, information on whether the surfaces of the polyhedral objects are information surfaces, and information displayed on the surfaces. The storage unit 620 stores information mapped to the information surfaces of the polyhedral objects. For example, the image and text indicating the phone book menu and the sub-menu items of the phone book menu may be mapped to the surfaces of the hexagonal object corresponding to the phone book menu. The storage unit 620 may be composed of at least one of a non-volatile memory device, such as a read only memory (ROM), a programmable ROM (PROM), an erasable programmable ROM (EPROM), an electrically erasable programmable ROM (EEPROM), or a flash memory, a volatile memory device, such as a random access memory (RAM), and a storage medium, such as a hard disk drive (HDD), but the storage unit 620 is not limited to the above-mentioned devices.

The input unit 630 receives input values from a user for selecting a specific polyhedral object from polyhedral object groups or for selecting one of the information surfaces of the polyhedral object or a specific menu displayed on the information surface. The input unit 630 receives an input value for switching a view point from the user. In order to switch the view point, the input unit 630 may include an additional key for switching the view point. For example, when the input unit 630 is composed of a key pad, the input unit 630 may additionally include a directional key (not shown) for directional movement in an x-y plane, a zoom-in/zoom-out key (not shown) for directional movement in a z axis, and a key (not shown) for moving the camera view. The input unit 630 may be integrated into the three-dimensional MGUI apparatus 600 as hardware, or it may be composed of a separate module, such as a mouse, a keyboard, or a joystick. When the input unit 630 is composed of a separate module, the input unit 630 may be a wired or wireless system.

The control unit 640 connects and controls the other components in the three-dimensional MGUI apparatus 600. For example, the control unit 640 processes the input value that is input through the input unit 630, and transmits the processed value to the GUI unit 650.

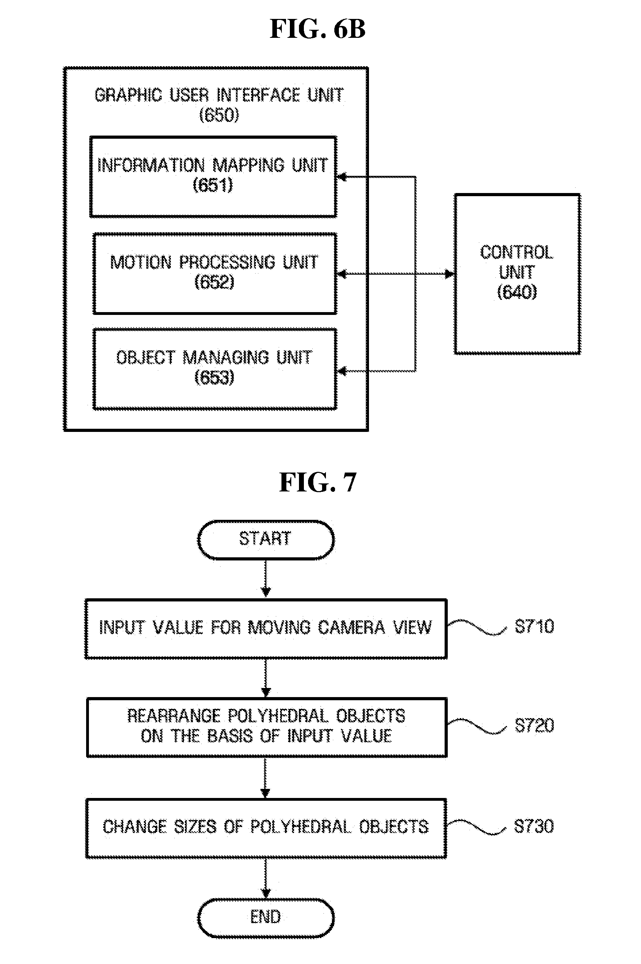

The GUI unit 650 uses the polyhedral object generated by the generating unit 610 to provide a three-dimensional MGUI. A detailed description thereof will be made below with reference to FIG. 6B.

FIG. 6B is a block diagram illustrating the structure of the GUI unit 650 in more detail. The GUI unit 650 shown in FIG. 6B includes an information mapping unit 651, a motion processing unit 652, and an object managing unit 653.

The information mapping unit 651 gives the above-mentioned structure attributes to the polyhedral object generated by the generating unit 610, and maps information to the surfaces of the polyhedral object, on the basis of the attributes. That is, the information mapping unit 651 maps information to the corresponding information surfaces according to whether the surfaces of the polyhedral object are information surfaces. The amount of information to be mapped to the information surface of the polyhedral object depends on a distance from the camera view. For example, when a predetermined polyhedral object is close to the camera view, the information mapping unit 651 displays a large amount of information on the surface displayed to a user. On the other hand, when the polyhedral object is distant from the camera view, the information mapping unit 651 displays brief information on the surface displayed to the user.

The motion processing unit 652 rearranges a number of polyhedral objects, with the movement of the camera view, and changes the sizes and angles of the polyhedral objects. That is, as a predetermined polyhedral object becomes more distant from the camera view, the motion processing unit 652 decreases the size of the polyhedral object. On the other hand, as a predetermined polyhedral object is closer to the camera view, the motion processing unit 652 increases the size of the polyhedral object. If the camera view rotates in a given direction with a specific surface of the polyhedral object being displayed, the motion processing unit 652 rotates the polyhedral object in a direction in accordance with the camera rotation. That is, the motion processing unit 652 rotates the polyhedral object such that the surface displayed before the camera view rotates always faces the camera view.

When the user selects a specific polyhedral object from a group of polyhedral objects, the object managing unit 653 performs a process of emphasizing the selected polyhedral object. The selected polyhedral object can be emphasized, for example, by forming a mark indicating a focus in the vicinity of the selected polyhedral object or by changing the attributes of the selected polyhedral object. For example, the polyhedral object selected by the user may be emphasized by increasing the size of the selected polyhedral object, or by changing the colors of the surfaces of the selected polyhedral object. Alternatively, the polyhedral object selected by the user may be emphasized by changing the attributes of non-selected polyhedral objects in the group.

As described above, the GUI unit 650 changes the arrangement of the polyhedral objects with the movement of the camera view, rotates the polyhedral object along the camera view, or modifies information displayed on the polyhedral object on the basis of the distance between the polyhedral object and the camera view. These operations may be separately performed according to the movement of the camera view, or more than one of these operations may be performed in combination. For example, when the camera view rotates in the right direction, while being distant from the polyhedral objects arranged in a circle, with specific information surfaces of the polyhedral objects displayed to a user, the motion processing unit 652 rotates the polyhedral objects along the camera view in the right direction such that the specific information surfaces of the polyhedral objects can be continuously displayed to the user. At the same time, the information mapping unit 651 displays brief information on the specific information surfaces of the polyhedral objects, since the polyhedral objects are distant from the camera view.

The display unit 660 visually displays the result processed by the GUI unit 650. The display unit 660 may be separately provided from the input unit 630 as hardware, or it may be combined with the input unit 630, as in a touch pad or a touch screen.

Next, a method of providing a three-dimensional MGUI according to an exemplary embodiment of the invention will be described below with reference to FIGS. 7 to 12C.

FIG. 7 is a flowchart illustrating a process of rearranging polyhedral objects according to the movement of the camera view.

First, a user inputs input values for moving the camera view S710 through an input unit, such as a key pad, a keyboard, a mouse, a touch pad, or a touch screen. For example, when the input unit 630 is composed of a key pad, the user can operate a camera view moving key (not shown) to move the camera view. Alternatively, a motion sensor, such as a gyro sensor, may be used to sense the motion of the three-dimensional MGUI apparatus 600, thereby moving the camera view. The input values for moving the camera view are transmitted to the GUI unit 650 through the control unit 640.

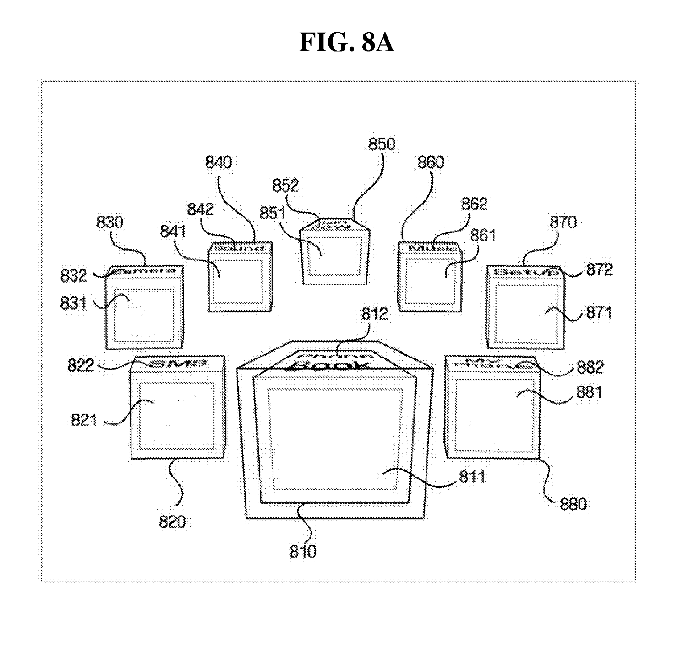

Then, the graphic user interface unit 650 rearranges the polyhedral objects on the basis of the input value (S720), thereby changing the sizes of the polyhedral objects (S730). The above-mentioned process will be described in more detail below with reference to FIGS. 8A to 8C.

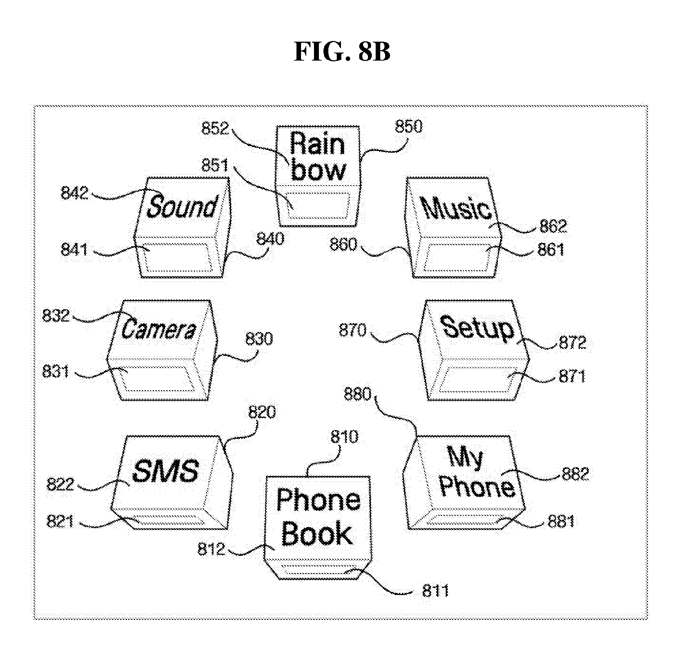

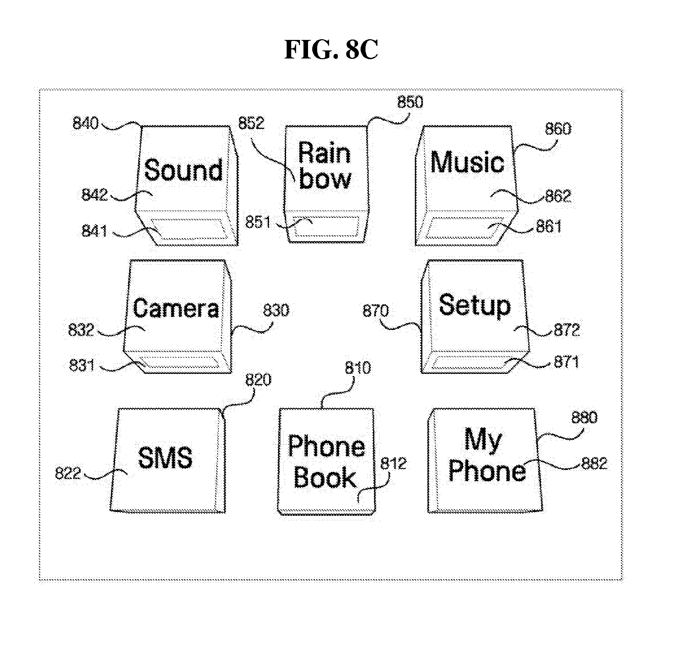

FIG. 8A shows polyhedral objects 810, 820, 830, 840, 850, 860, 870, and 880 that are arranged in a circle. In FIG. 8A, images are mapped to first surfaces 811, 821, 831, 841, 851, 861, 871, and 881 of the polyhedral objects 810, 820, 830, 840, 850, 860, 870, and 880, respectively, and titles are mapped to second surfaces 812, 822, 832, 842, 852, 862, 872, and 882 of the polyhedral objects 810, 820, 830, 840, 850, 860, 870, and 880, respectively. In addition, the first surfaces 811, 821, 831, 841, 851, 861, 871, and 881 are displayed to the user. When the camera view moves in the upper direction of the polyhedral objects 810, 820, 830, 840, 850, 860, 870, and 880 in FIG. 8A, the motion processing unit 652 gradually moves the polyhedral objects 810, 820, 830, 840, 850, 860, 870, and 880 to the center as shown in FIG. 8B, and rearranges the polyhedral objects 810, 820, 830, 840, 850, 860, 870, and 880 in a lattice shape as shown in FIG. 8C. In this step, the polyhedral objects 810, 820, 830, 840, 850, 860, 870, and 880 are continuously rearranged, and the sizes of the polyhedral objects 810, 820, 830, 840, 850, 860, 870, and 880 are continuously changed.

When the polyhedral objects are rearranged with the movement of the camera view, the polyhedral objects are displayed in a large size, which makes it possible to effectively communicate information to the user, as compared with a structure in which the polyhedral objects are not rearranged. In FIG. 8A, the user can operate left and right keys to select a specific polyhedral object. In contrast, when the polyhedral objects are rearranged as shown in FIG. 8C, the user can use four keys, that is, up, down, left, and right keys, to select a specific polyhedral object.

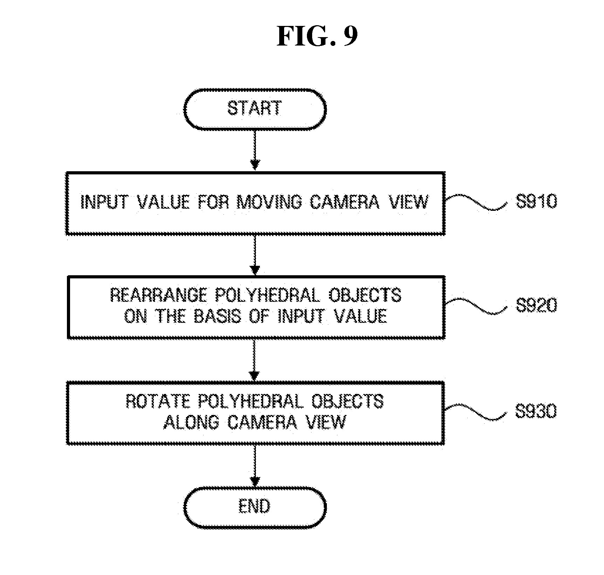

FIG. 9 is a flowchart illustrating a process of rearranging the polyhedral objects with the movement of the camera view and rotating the polyhedral objects to face the camera view, thereby displaying information.

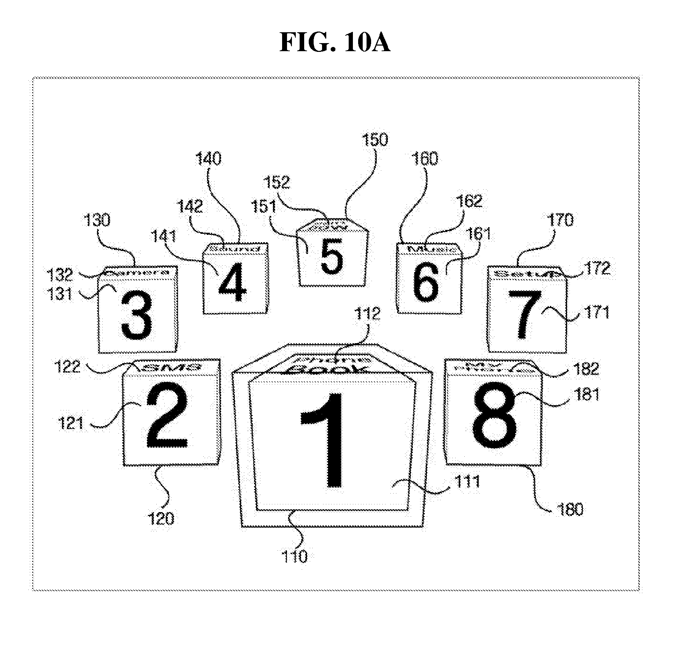

When a user inputs input values for moving the camera view (S910), the graphic user interface unit 650 rearranges the polyhedral objects on the basis of the input values (S920), and rotates the polyhedral objects along the camera view (S930). The above-mentioned operation will be described in more detail below with reference to FIGS. 10A to 10C.

FIG. 10A shows polyhedral objects 110, 120, 130, 140, 150, 160, 170, and 180 arranged in a circle. In FIG. 10A, figures are mapped to first surfaces 111, 121, 131, 141, 151, 161, 171, and 181 of the polyhedral objects 110, 120, 130, 140, 150, 160, 170, and 180, respectively. Also, titles are mapped to second surfaces 112, 122, 132, 142, 152, 162, 172, and 182 of the polyhedral objects 110, 120, 130, 140, 150, 160, 170, and 180, respectively.

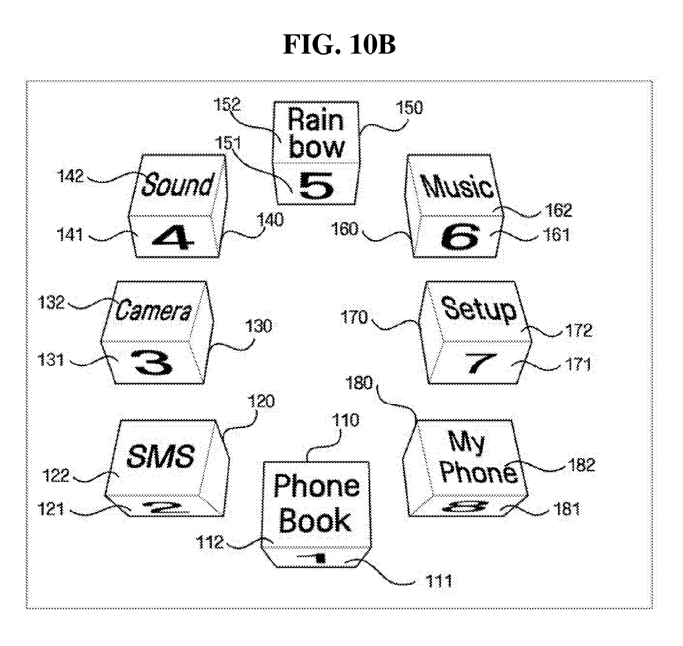

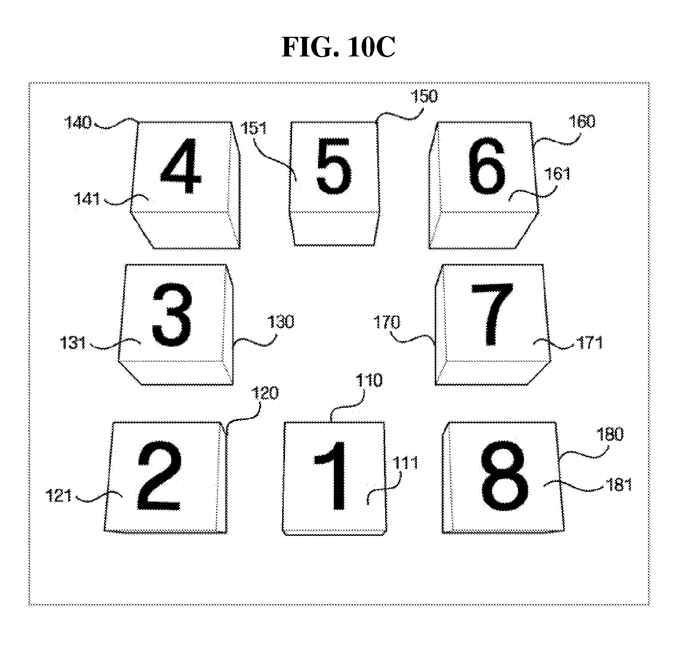

When the camera view moves in the upper direction of the polyhedral objects 110, 120, 130, 140, 150, 160, 170, and 180 arranged in FIG. 10A, the motion processing unit 652 gradually moves the polyhedral objects 110, 120, 130, 140, 150, 160, 170, and 180 to the center as shown in FIG. 10B, and rearranges the polyhedral objects 110, 120, 130, 140, 150, 160, 170, and 180 in a lattice shape, as shown in FIG. 10C. At that time, the motion processing unit 652 rotates the polyhedral objects 110, 120, 130, 140, 150, 160, 170, and 180 along the movement of the camera view such that the first surfaces 111, 121, 131, 141, 151, 161, 171, and 181 of the polyhedral objects 110, 120, 130, 140, 150, 160, 170, and 180, respectively, face the camera view. In this case, the surfaces facing the camera view may be surfaces being currently displayed to a user, surfaces selected by the user, or surfaces having high-importance information displayed thereon. In this step, the following operations are continuously performed: an operation of changing the arrangement of the polyhedral objects 110, 120, 130, 140, 150, 160, 170, and 180; an operation of changing the sizes of the polyhedral objects 110, 120, 130, 140, 150, 160, 170, and 180 while changing the arrangement thereof; and an operation of rotating the polyhedral objects 110, 120, 130, 140, 150, 160, 170, and 180 such that the first surfaces 111, 121, 131, 141, 151, 161, 171, and 181 face the camera view.

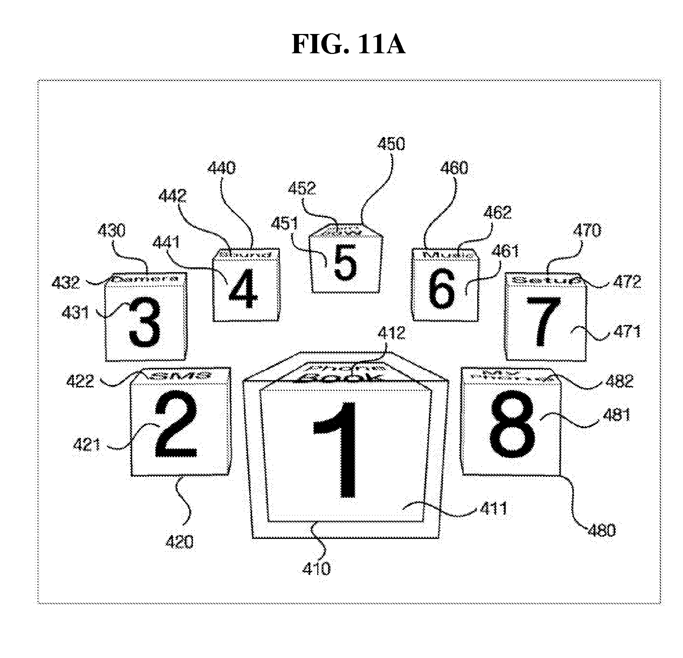

Alternatively, according to another exemplary embodiment of the invention, information can be communicated to a user by modifying information to be mapped to the surfaces facing the camera view without rotating polyhedral objects. A detailed description thereof will be made with reference to FIGS. 11A to 11C.

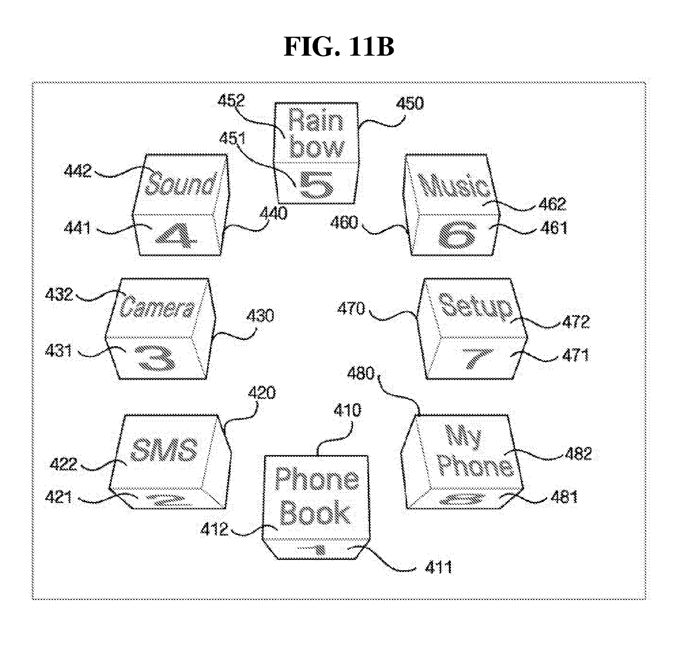

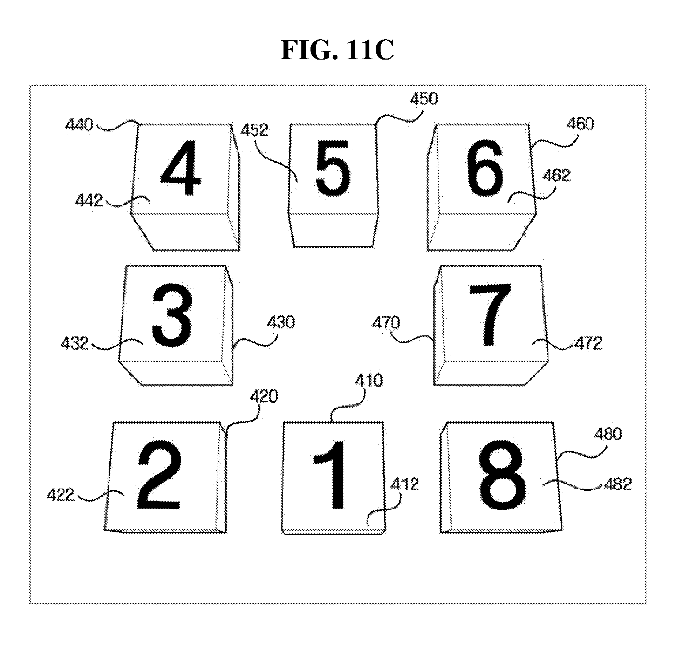

FIG. 11A shows polyhedral objects 410, 420, 430, 440, 450, 460, 470, and 480 arranged in a circle. In FIG. 11A, figures are mapped to first surfaces 411, 421, 431, 441, 451, 461, 471, and 481 of the polyhedral objects 410, 420, 430, 440, 450, 460, 470, and 480, respectively. Also, titles are mapped to second surfaces 412, 422, 432, 442, 452, 462, 472, and 482 of the polyhedral objects 410, 420, 430, 440, 450, 460, 470, and 480, respectively. When the camera view moves in the upper direction of the polyhedral objects 410, 420, 430, 440, 450, 460, 470, and 480 arranged in FIG. 11A, the motion processing unit 652 gradually moves the polyhedral objects 410, 420, 430, 440, 450, 460, 470, and 480 to the center, as shown in FIG. 11B. At that time, information items displayed on the first surfaces and the second surfaces of the polyhedral objects, that is, the figures and the titles, are gradually removed by the information mapping unit 651. Thereafter, when the polyhedral objects 410, 420, 430, 440, 450, 460, 470, and 480 are rearranged in a lattice shape, the information mapping unit 651 maps figures to the surfaces of the polyhedral objects facing the camera view, that is, the second surfaces 412, 422, 432, 442, 452, 462, 472, and 482 of the polyhedral objects 410, 420, 430, 440, 450, 460, 470, and 480, respectively, as shown in FIG. 11C. In this case, the following operations are continuously performed: an operation of changing the arrangement of the polyhedral objects 410, 420, 430, 440, 450, 460, 470, and 480; an operation of removing the figures and the titles from the surfaces; and an operation of displaying figure information on the second surfaces 412, 422, 432, 442, 452, 462, 472, and 482 facing the camera view again.

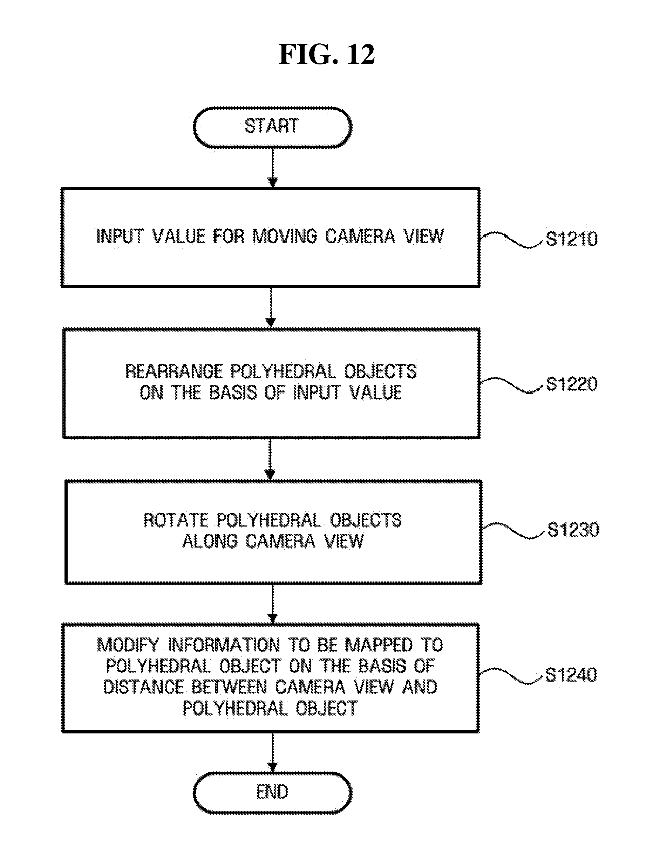

FIG. 12 is a flowchart illustrating a process of rearranging polyhedral objects with the movement of the camera view, and of changing information displayed on the surfaces of the polyhedral objects.

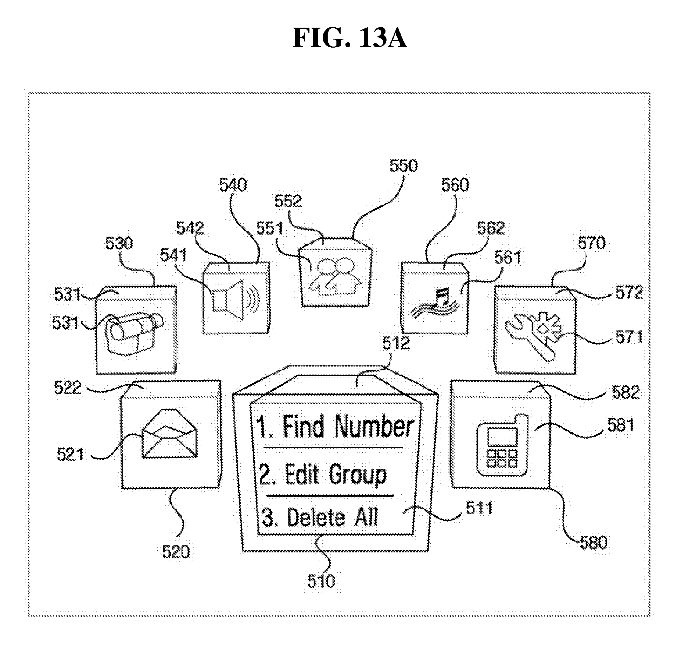

When a user inputs values for moving the camera view (S1210), the graphic user interface unit 650 rearranges polyhedral objects on the basis of the input values (S1220), and rotates the polyhedral objects along the camera view (S1230). Then, the GUI unit 650 modifies information displayed on the information surfaces of the polyhedral objects on the basis of the distances between the polyhedral objects and the camera view (S1240). This process will be described in more detail below with reference to FIGS. 13A to 13C.

FIG. 13A shows a number of polyhedral objects 510, 520, 530, 540, 550, 560, 570, and 580 arranged in a circle. In FIG. 13A, first surfaces 521, 531, 541, 551, 561, 571, and 581 of the polyhedral objects 520, 530, 540, 550, 560, 570 and 580, respectively, which have the corresponding menu images thereon, are displayed. Also, a first surface 511 of the phone book object 510, which has a sub-menu thereon, is displayed.

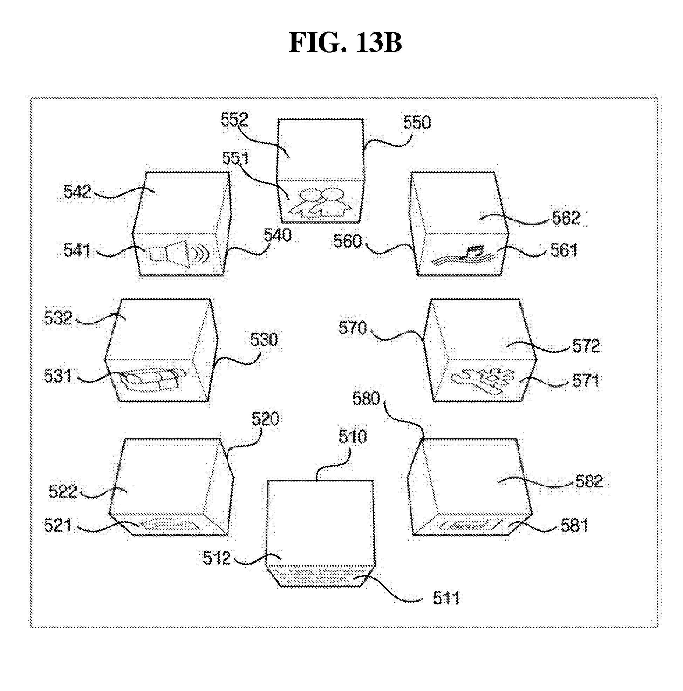

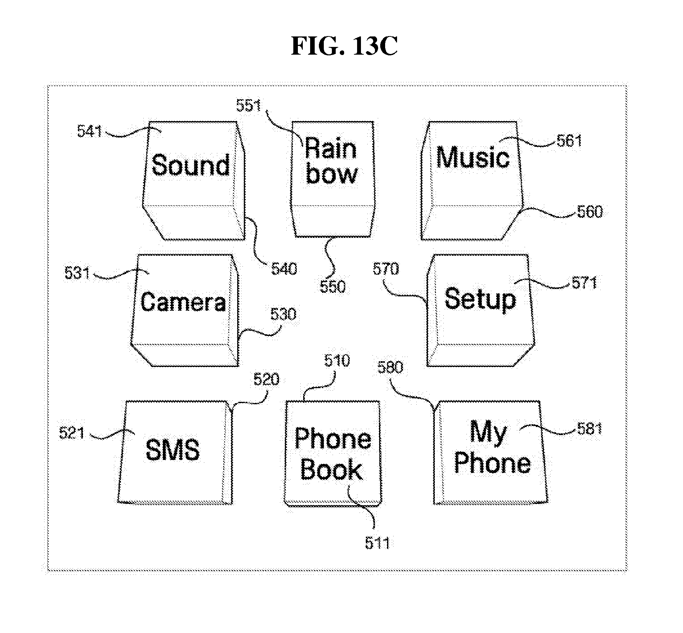

When the camera view moves in the upper direction of the polyhedral objects shown in FIG. 13A, the motion processing unit 652 gradually moves the polyhedral objects 510, 520, 530, 540, 550, 560, 570, and 580 to the center as shown in FIG. 13B, and rearranges the polyhedral objects in a lattice shape, as shown in FIG. 13C. Then, the motion processing unit 652 rotates the polyhedral objects 510, 520, 530, 540, 550, 560, 570, and 580 such that the first surfaces of the polyhedral objects 510, 520, 530, 540, 550, 560, 570, and 580 face the camera view. When the polyhedral objects 510, 520, 530, 540, 550, 560, 570, and 580 are rotated such that the first surfaces 511, 521, 531, 541, 551, 561, 571, and 581, respectively, face the camera view, the information mapping unit 651 removes information displayed on the first surfaces 511, 521, 531, 541, 551, 561, 571, and 581 of the polyhedral objects 510, 520, 530, 540, 550, 560, 570, and 580, respectively, and displays new information, such as the titles of the polyhedral objects on the first surfaces of the polyhedral objects.

In this operation, the following operations are continuously performed: an operation of changing the arrangement of the polyhedral objects 510, 520, 530, 540, 550, 560, 570, and 580; an operation of changing the sizes of the polyhedral objects 510, 520, 530, 540, 550, 560, 570, and 580 while changing the arrangement thereof; an operation of rotating the polyhedral objects 510, 520, 530, 540, 550, 560, 570, and 580 such that the first surfaces 511, 521, 531, 541, 551, 561, 571, and 581, respectively, face the camera view; an operation of gradually removing information displayed on the first surfaces 511, 521, 531, 541, 551, 561, 571, and 581 of the polyhedral objects (that is, the sub-menu displayed on the phone book object and the images displayed on the other polyhedral objects); and an operation of displaying titles on the first surfaces 511, 521, 531, 541, 551, 561, 571, and 581 of the rotated polyhedral objects.

While the three-dimensional MGUI and the apparatus and method for providing the three-dimensional MGUI according to exemplary embodiments of the present invention have been described above with reference to the accompanying drawings.

As described above, the three-dimensional MGUI and the apparatus and method for providing the three-dimensional MGUI according to exemplary embodiments of the present invention can obtain the following effects.

First, it is possible to prevent unnecessary information from being communicated to a user by changing the arrangement of polyhedral objects with the movement of a camera view and by displaying a surface having important information thereon toward the camera view.

Second, it is possible to effectively operate polyhedral objects by changing the arrangement of the polyhedral objects.
Third, it is possible to intuitionally communicate information to a user and thus to satisfy the sensibility of the user.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An apparatus for providing a three-dimensional motion graphic user interface, the apparatus comprising:
a display unit (660) which displays along a first view point a plurality of polyhedral objects having surfaces on which information is displayed;
an input unit (630) which receives input values for switching view points from a user; and
a graphic user interface unit (650) which rearranges the polyhedral objects along a second view point based on the input values, and displays the information on surfaces of the rearranged polyhedral objects that are orthogonal to the second view point.

2. The apparatus of claim 1, wherein the surfaces of the rearranged polyhedral objects having the information displayed thereon are determined by rotating the surfaces of the polyhedral objects at the first view point at an angle.

3. The apparatus of claim 1, wherein the information displayed on the surfaces of the rearranged polyhedral objects orthogonal to the second view point is changed according to the second view point.

4. The apparatus of claim 3, wherein the information displayed on the surfaces of the rearranged polyhedral objects orthogonal to the second view point has a hierarchy structure with respect to the information displayed on the surfaces of the polyhedral objects at the first view point.

5. The apparatus of claim 4, wherein the information displayed on the surfaces of the rearranged polyhedral objects orthogonal to the second view point is at least one of a main menu and a sub-menu of the information displayed on the surfaces of the polyhedral objects at the first view point.

6. The apparatus of any preceding claim , wherein sizes and angles of the polyhedral objects are changed according to the second view point.

7. The apparatus of any preceding claim , wherein the information is at least one of a text segment, an image, a moving picture, an icon, a button, a two-dimensional widget, and a three-dimensional icon.

8. A method of providing a three-dimensional motion graphic user interface, the method comprising:
displaying along a first view point a plurality of polyhedral objects having surfaces on which information is displayed;
receiving input values for changing a view point from a user; and
rearranging the polyhedral objects along a second view point, based on the input values, and displaying the information on surfaces of the rearranged polyhedral objects that are orthogonal to the second view point.

9. The method of claim 8, wherein the surfaces of the rearranged polyhedral objects having the information displayed thereon are determined by rotating the surfaces of the polyhedral objects having the information displayed thereon at the first view point at a predetermined angle.

10. The method of claim 8, wherein the rearranging of the polyhedral objects comprises changing, according to the second view point, the information displayed on the surfaces of the rearranged polyhedral objects orthogonal to the second view point.

11. The method of claim 10, wherein the information displayed on the surfaces of the rearranged polyhedral objects orthogonal to the second view point has a hierarchy structure with respect to the information displayed on the surfaces of the polyhedral objects at the first view point.

12. The method of claim 11, wherein the information displayed on the surfaces of the rearranged polyhedral objects orthogonal to the second view point is at least one of a main menu and a sub-menu of the information displayed on the surfaces of the polyhedral objects at the first view point.

13. The method of any one of claims 8-12, wherein the information is at least one of a text segment, an image, a moving picture, an icon, a button, a two-dimensional widget, and a three-dimensional icon.

14. The method of any one of claims 8-13, wherein sizes and angles of the polyhedral objects are changed according to the second view point.

15. A three-dimensional motion graphic user interface, comprising:
a three-dimensional space comprising a plane and an axis orthogonal to the plane; and
a polyhedral object having a surface on which information is displayed;
wherein the polyhedral object is arranged in the three-dimensional space along a first view point, rearranged along a second view point on the basis of values input by a user, and displays information on a surface orthogonal to the second view point.

16. The three-dimensional motion graphic user interface of claim 15, wherein the surface of the rearranged polyhedral object having the information displayed thereon is determined by rotating the surface of the polyhedral object having the information displayed thereon at the first view point at a predetermined angle.

17. The three-dimensional motion graphic user interface of claim 15, wherein the information displayed on the surface of the rearranged polyhedral object orthogonal to the second view point is changed according to the second view point.

18. The three-dimensional motion graphic user interface of claim 17, wherein the information displayed on the surface of the rearranged polyhedral object orthogonal to the second view point has a hierarchy structure with respect to the information displayed on the surface of the polyhedral object at the first view point.

19. The three-dimensional motion graphic user interface of claim 18, wherein the information displayed on the surface of the rearranged polyhedral object orthogonal to the second view point is at least one of a main menu and a sub-menu of the information displayed on the surface of the polyhedral object at the first view point.

20. The three-dimensional motion graphic user interface of any one of claims 15-19, wherein the information is at least one of a text segment, an image, a moving picture, an icon, a button, a two-dimensional widget, and a three-dimensional icon.

21. The three-dimensional motion graphic user interface of any one of claims 15-20, wherein a size and an angle of the polyhedral object are changed according to the second view point.
